# EUROPÄISCHE PATENTSCHRIFT

(11) **EP 2 995 401 B1**
(45) Veröffentlichungstag und Bekanntmachung des Hinweises auf die Patenterteilung: **22.03.2017**
(21) Anmeldenummer: 15183571.7
(22) Anmeldetag: 02.09.2015
(51) Int. Cl.: B23B 31/20

(54) **SPANNVORRICHTUNG**
CLAMPING DEVICE
DISPOSITIF DE SERRAGE

(30) Priorität: 09.09.2014 DE 102014218039
(43) Veröffentlichungstag der Anmeldung: 16.03.2016
(73) Patentinhaber: Hainbuch GmbH Spannende Technik, 71672 Marbach (DE)
(72) Erfinder: Weller, Hans-Michael, 71672 Marbach (DE)
(74) Vertreter: Patentanwaltskanzlei Cartagena

(56) Entgegenhaltungen:
- DE-C2- 4 214 838
- DE-U1- 9 405 935
- DE-U1-202013 103 278
- US-B2- 6 575 477

## Beschreibung

### ANWENDUNGSGEBIET UND STAND DER TECHNIK

Die Erfindung betrifft eine Spannvorrichtung zum Einspannen eines Werkstücks, gemäß der Präambel des Anspruchs 1, mit einem Spannfutter, einer im Spannfutter gelagerten Spannzange mit einer Mehrzahl von ringförmig angeordneten Spannsegmenten, die zum Zwecke des Spannens und Entspannens des Werkstücks durch axiale Bewegung gegenüber dem Spannfutter radial aufgeweitet und radial zusammengezogen werden kann, mit einer Zugstange, die axial gegenüber dem Spannfutter verlagerbar ist, und mit einer Zughülse zur axialen Kraftübertragung von der Zugstange auf die Spannzange mittels eines Zugstegs, der formschlüssig mit der Spannzange zusammenwirkt (siehe z.B. DE 4 214 838 A1).

Eine solche gattungsgemäße Spannvorrichtung, die den Ausgangspunkt für die nachfolgend erläuterte Erfindung darstellt, dient üblicherweise dem Einspannen von Werkstücken zum Zwecke ihrer Bearbeitung, insbesondere von metallischen Werkstücken zum Zwecke ihrer spannenden Bearbeitung. Sie umfasst mindestens drei zueinander relativbewegliche Komponenten, nämlich das üblicherweise ringförmig die Spannzange umgebende Spannfutter, die gegenüber dem Spannfutter radial und axial beweglichen Spannsegmente, die zusammengefasst als Spannzange bezeichnet werden, sowie die Zugstange und die Zughülse, die bei gattungsgemäßen Spannvorrichtungen zumindest in Axialrichtung im Betrieb relativ zueinander ortsfest bleiben.

Durch die axiale Bewegung der Zugstange mitsamt Zughülse kann die ebenfalls axiale Bewegung der Spannzange und ihrer einzelnen Spannsegmente bewirkt werden. Die Spannzange wirkt mit dem Spannfutter derart zusammen, dass diese axiale Bewegung auch eine radiale Bewegung der Spannsegmente bewirkt, wobei hierfür vorzugsweise gegenüber der Axialrichtung angestellte Gleitflächen innenseitig am Spannfutter und außenseitig an der Spannzange vorgesehen sind. Über diese Gleitflächen kann die axiale Bewegung der Spannzange gegenüber dem Spannfutter ein radiales Zusammenziehen der Spannsegmente der Spannzange bewirken. Hierbei werden üblicherweise zwischen den Spannsegmenten der Spannzange vorgesehene elastische Abschnitte komprimiert. Durch Verlagerung der Spannzange gegenüber dem Spannfutter in entgegengesetzter Richtung kann die Aufweitung der Spannzange bewirkt werden, wobei diese durch die besagten elastischen Zwischenelemente zwischen den Spannsegmenten bewirkt wird. Üblicherweise am hinteren Ende der Spannzange befindet sich diese in einem formschlüssigen Eingriff mit der Zughülse, damit hierdurch die axiale Bewegung der Spannzange bewirkt werden kann.

Soll die Spannzange gewechselt werden, so muss der Formschluss zwischen Zughülse und Spannzange gelöst werden. Hierfür sind manuell zu betätigende Werkzeuge bekannt, die von einer Stirnseite aus in Eingriff mit den Spannsegmenten gebracht werden können und diese um eine Tangentialachse verkippen können, so dass die Spannzange außer Eingriff mit der Zughülse gelangt. Dieser Wechselvorgang ist jedoch vergleichsweise aufwändig.

Um das Wechseln der Spannzange zu erleichtern, wird daher meist zunächst die Spannzange gegenüber dem Spannfutter in eine besondere axiale Freigabestellung verfahren, die noch jenseits der axialen Relativstellung zwischen Spannfutter und Spannzange liegt, in welcher üblicherweise ein Werkstückwechsel stattfindet. In dieser Wechselstellung erfolgt dann das Lösen der Spannzange in erleichterter Weise. Hierbei kann eine Erleichterung des Lösens durch eine Bajonett-Gestaltung zwischen Zughülse und Spannzange erzielt werden.

Problematisch an besagter Wechselstellung ist jedoch, dass ein gezieltes Ansteuern der Axial-position der Zugstange üblicherweise nicht vorgesehen ist. Stattdessen kann die Zugstange nur zwischen zwei Endlagen hin- und her bewegt werden. Um nun besagte Wechselstellung zu erzielen, muss die diesbezügliche Endlage durch Anpassen eines entsprechenden Anschlags zunächst geändert werden. Der Aufwand zum Wechseln der Spannzange ist somit bei heutigen gattungsgemäßen Spannvorrichtungen zu hoch.

### AUFGABE UND LÖSUNG

Aufgabe der Erfindung ist es, eine Möglichkeit zur Verfügung zu stellen, um einen erleichterten Wechsel der Spannzange zu ermöglichen.

Erfindungsgemäß wird dies dadurch erreicht, dass eine Spannvorrichtung gattungsgemäßer Art derart ausgebildet ist, dass der Zugsteg gegenüber der Zugstange zwischen einer Betriebsrelativstellung und einer Wechselrelativstellung axial verlagerbar ist.

Erfindungsgemäß ist demnach vorgesehen, dass der an der Zughülse vorgesehene Zugsteg nicht in einer zumindest im zusammengesetzten Zustand der Spannvorrichtung stets gleichbleibenden Relativstellung bezogen auf die Axialrichtung zur Zugstange angeordnet ist, sondern zum Zwecke des Wechselns der Spannzange ohne Demontage der Spannvorrichtung gegenüber der Zugstange verlagert werden kann, so dass die Spannzange hierdurch eine Axialstellung einnehmen kann, die einen erleichterten Wechsel gestattet.

Zur Überführung in die Wechselrelativstellung ist an der Spannvorrichtung vorzugsweise ein von außen zugängliches Schaltmittel zur manuellen Verlagerung vorgesehen, dessen Relativbewegung gegenüber dem Spannfutter die axiale Verlagerung des Zugstegs gegenüber der Zugstange bewirkt.

Bei dem Schaltmittel handelt es sich vorzugsweise um ein Schaltmittel, insbesondere in Form eines umlaufenden Schaltrings, das um eine zentrische Hauptachse der Spannvorrichtung rotativ beweglich ist. Es sind jedoch auch andere Gestaltungen denkbar, beispielsweise mehrere in Umfangsrichtung verteilte Gewindetriebe, die parallel zur Hauptachse angeordnet sind, zu dieser jedoch exzentrisch versetzt sind.

Die einfachste Lösung zur Erzielung der axialen Beweglichkeit ist gegeben, wenn die Zughülse und die Zugstange durch das mindestens eine Schaltmittel vollständig voneinander gelöst werden, so dass anschließend die Zughülse gegenüber der Zugstange manuell in die axiale Wechselrelativstellung gezogen werden kann. Dies wäre beispielsweise durch eine von außen zugängliche Verschraubung zwischen Zughülse und Zugstange realisierbar. Ebenfalls realisierbar könnte eine solche Gestaltung über eine Bajonettverbindung zwischen Zughülse und Zugstange realisierbar sein, die durch eine Relativdrehbewegung gelöst wird und anschließend besagtes manuelles Axialverlagern der Zughülse gestattet.

Bevorzugt ist eine Gestaltung, bei der die Spannvorrichtung über eine Kopplungseinrichtung verfügt, die eine axiale Verlagerung der Zughülse gegenüber der Zugstange durch eine rotative Relativbewegung der Zughülse gegenüber dem Spannfutter bewirkt. Hierdurch wird eine Zwangskopplung realisiert, durch die die gewünschte axiale Verlagerung des Zugstegs durch eine rotative Verlagerung des Schaltmittels erzielbar ist. Diese Zwangskopplung ist vorzugsweise bidirektional wirksam.

Bei einer solchen Gestaltung mit Zwangskopplung ist vorgesehen, dass eine Drehung der Zughülse gegenüber dem Spannfutter um die Hauptachse auch eine axiale Verlagerung der Zughülse gegenüber der Zugstange verursacht. In einem solchen Fall ist das Schaltmittel, insbesondere das rotativ gegenüber der Hauptachse drehbewegliche Schaltmittel, in der Lage, eine Drehung der Zughülse gegenüber dem Spannfutter zu verursachen, welche durch die genannte Kopplungseinrichtung zu einer axialen Verlagerung der Zughülse gegenüber der Zugstange und/oder dem Spannfutter führt. Bei einer solchen Gestaltung ist vorzugsweise vorgesehen, dass das Schaltmittel, insbesondere in Art eines Schaltrings, drehstarr mit der Zughülse verbunden ist. Da das Schaltmittel jedoch vorzugsweise in Axialrichtung ortsfest zum Spannfutter angeordnet ist, ist insbesondere vorzugsweise vorgesehen, dass die Koppelung zwischen dem Schaltmittel und der Zughülse lediglich bezogen auf die Drehstellung gegeben ist, während in Axialrichtung eine Relativbeweglichkeit erhalten bleibt. Dies kann insbesondere durch mindestens einen in Radialrichtung erstreckten Schaltbolzen erzielt werden, der das Spannfutter durchdringt und in eine axial erstreckte Nut an der Außenseite der Zughülse eingreift.

Die Koppelung der rotativen Relativbewegung der Zughülse gegenüber dem Spannfutter mit der axialen Bewegung der Zughülse gegenüber der Zugstange kann auf viele verschiedene Weisen realisiert sein.

Eine erste Variante sieht vor, dass die Kopplungseinrichtung als Gewindekopplungseinrichtung ausgebildet ist und ein Innengewinde und ein hierin eingesetztes Außengewinde umfasst. Das Außengewinde ist vorzugsweise an einem Ende der Zugstange vorgesehen, während das Innengewinde vorzugsweise an der Innenseite der Zughülse vorgesehen ist. Wird die Zughülse nun gegenüber der Zugstange gedreht, insbesondere gemeinsam mit einem entsprechenden Schaltmittel, so wird die gewünschte axiale Verlagerung hierdurch erzielt. Bei einem Schaltmittel, welches um die Hauptachse drehbeweglich angeordnet ist, wird es als wünschenswert angesehen, dass diese Drehbeweglichkeit nur über einen beschränkten Winkel von beispielsweise 45° gegeben ist. Dies erleichtert die Kopplung des zumindest teilweise außenliegenden Schaltmittels mit der innenliegenden Zughülse. Um eine ausreichend große Verlagerung der Zughülse gegenüber der Zugstange dennoch bewirken zu können, handelt es sich bei dem Gewinde vorzugsweise um ein mehrgängiges Gewinde mit vergleichsweise großer Gewindesteigung. Vorzugsweise handelt es sich um ein mindestens zweigängiges, insbesondere vorzugsweise um ein mindestens viergängiges Gewinde.

Eine Alternative zum Gewinde stellt eine Kopplungseinrichtung dar, die als KulissenKopplungseinrichtung ausgebildet ist und entsprechend eine Kulissenspur und einen in die Kulissenspur eingesetzten Kulissengleiter aufweist. Die Wirkung einer solchen Kulisse ist der eines Gewindes ähnlich, allerdings kann durch Formgebung der Kulisse eine komplexere Bewegungsfunktion zwischen rotativer Relativbewegung und axialer Verlagerung der Zughülse bewirkt werden, insbesondere eine solche, bei der die Drehbewegung der Zughülse phasenweise keine Axialverlagerung der Zughülse gegenüber der Zugstange bewirkt, um in solchen Phasen durch eine rein rotative Relativbewegung zwischen Zugstange und Zughülse ein Bajonett lösen zu können oder dergleichen. Auf Detailaspekte zur Gestaltung der KulissenKopplungseinrichtung wird im Weiteren noch eingegangen.

Eine dritte bevorzugte Variante einer Kopplungseinrichtung sieht vor, dass die Kopplungseinrichtung zwei aufeinander zuweisende und aneinander anliegende Stirnflächen an der Zughülse und der Zugstange aufweist, wobei die Stirnflächen zumindest abschnittweise uneben sind, so dass eine rotative Relativbewegung eine Axialrelativbewegung der Stirnfläche erzwingt oder zulässt. Auch diese dritte Gestaltung ist mit der eines Gewindes oder einer Kulisse verwandt, da auch sie eine axiale Verlagerung in Konsequenz einer rotativen Relativbewegung zwischen Zughülse und Spannfutter verursacht. Die Besonderheit ist hier, dass dies über aufeinander zuweisende Stirnflächen und deren Formgebung erzielt wird. Unter einer Stirnfläche wird im Sinne der Erfindung eine rein axial zugängliche Fläche am jeweiligen Bauteil verstanden.

Bezug nehmend auf die oben genannte Gestaltung der Kopplungseinrichtung als Kulissen-Kopplungseinrichtung bieten sich zwei grundsätzlich unterschiedliche Möglichkeiten an.

Von den beiden Hauptkomponenten der Kulissen-Kopplungseinrichtung, nämlich der Kulissenspur und dem Kulissengleiter, ist bei einer ersten Variante eine der Komponenten ortsfest an der Zughülse vorgesehen, während die zweite Komponente ortsfest an der Zugstange vorgesehen ist. Die Kulissen-Kopplungseinrichtung wirkt somit unmittelbar zwischen den beiden gegeneinander axial zu beabstandenden Komponenten der Zugstange und der Zughülse. Bei der Überführung der Zughülse und damit des Zugstegs in die Wechselrelativstellung bleiben somit die Zughülse und die Zugstange in permanentem Eingriff, wobei die Formgebung der Kulissenspur eine veränderte Axialrelativstellung trotz dieses bleibenden Eingriffs ermöglicht.

Bei einer hiervon abweichenden Variante ist eine der beiden Komponenten der KulissenKopplungseinrichtung ebenfalls an der Zughülse vorgesehen. Die zweite der Komponenten ist bei dieser zweiten Variante jedoch ortsfest am Spannfutter vorgesehen. Dies bedeutet, dass bei der Überführung in die Wechselrelativstellung diese dadurch erzielt wird, dass die Zwangsführung unmittelbar zwischen Zughülse und Spannfutter wirkt, also ohne Zwischenschaltung der Zugstange. In einem solchen Fall ist die Relativbewegung, die durch die Kulissenform vorgegeben wird und die zwischen Zughülse und Spannfutter stattfindet, jedoch so auszugestalten, dass diese Relativbewegung auch eine Entkoppelung der Zughülse von der Zugstange bewirkt, beispielsweise indem ein hierzwischen vorgesehenes Bajonett gelöst wird.

Im Falle einer Kulissen-Kopplungseinrichtung, die eine ihrer Komponenten am Spannfutter aufweist, ist die Kulissenspur vorzugsweise mit einem rein axialen Abschnitt ausgestattet, innerhalb dessen der Kulissengleiter während des Betriebes zum Zwecke des Einspannens und Lösens eines Werkstücks verfahren werden kann.

Die Verwendung einer Bajonettkupplung kann vorzugsweise auch zwischen Zughülse und Spannzange gegeben sein. In einem solchen Fall ist der Zugsteg auf Seiten der Zughülse derart ausgebildet, dass er Teil einer solchen Bajonettkupplung ist, insbesondere indem über den Umfang verteilt Aussparungen in diesem Zugsteg vorgesehen sind. Von besonderem Vorteil ist es dabei, wenn jene zur Überführung der Zughülse in ihre Wechselrelativstellung vorgesehene rotative Bewegung der Zughülse gleichzeitig auch die Entkoppelung der Bajonettkupplung zwischen Zughülse und Spannzange bewirkt. In einem solchen Fall ist die rotative Bewegung der Zughülse somit geeignet, gleichzeitig ihre axiale Bewegung in die Wechselrelativstellung und ihre Entkoppelung von der Spannzange im Sinne der genannten Bajonettkupplung zu bewirken.

### KURZBESCHREIBUNG DER ZEICHNUNGEN

Weitere Aspekte und Vorteile der Erfindung ergeben sich außer aus den Ansprüchen auch aus der Beschreibung bevorzugter Ausführungsbeispiele der Erfindung, die anhand der Figuren erläutert werden.
- Fig. 1a bis 1d: zeigen eine erste Ausführungsform eines erfindungsgemäßen Spannfutters mit einer Kulissen-Kopplungseinrichtung zwischen Zugstange und Zughülse,
- Fig. 2a bis 2d: zeigen eine Variante zur Gestaltung gemäß Fig. 1a bis 1d, bei der eine zusätzliche Kopplung zwischen Zugstange und Zughülse durch eine Bajonettkupplung gegeben ist,
- Fig. 3a bis 3e: zeigen eine dritte Ausführungsform einer erfindungsgemäßen Spannvorrichtung mit einer Kulissen-Kopplungseinrichtung zwischen Spannfutter und Zughülse,
- Fig. 4a bis 4d: zeigen eine vierte Ausführungsform einer erfindungsgemäßen Spannvorrichtung mit unebenen Stirnflächen an der Zugstange und der Zughülse und
- Fig. 5a bis 5d: zeigen eine fünfte Ausführungsform einer erfindungsgemäßen Spannvorrichtung, bei der ein Gewindetrieb zwischen Zugstange und Zughülse vorgesehen ist.

### DETAILLIERTE BESCHREIBUNG DER AUSFÜHRUNGSBEISPIELE

Die Figuren zeigen jeweils erfindungsgemäße Spannvorrichtungen, wobei zu jedem Ausführungsbeispiel eine Gesamtdarstellung im Schnitt sowie verschiedene Einzelteile oder Gruppen von Einzelteilen.

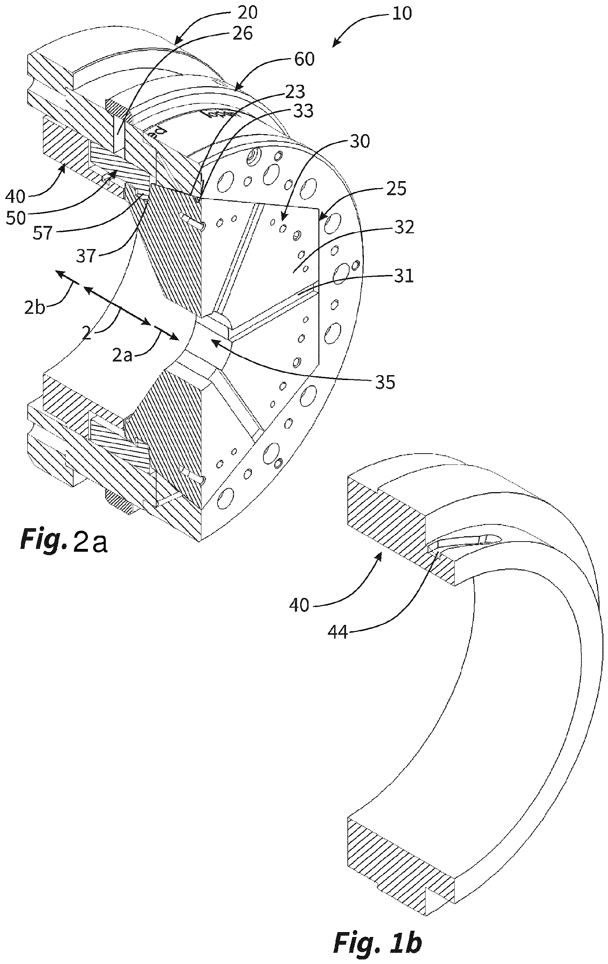

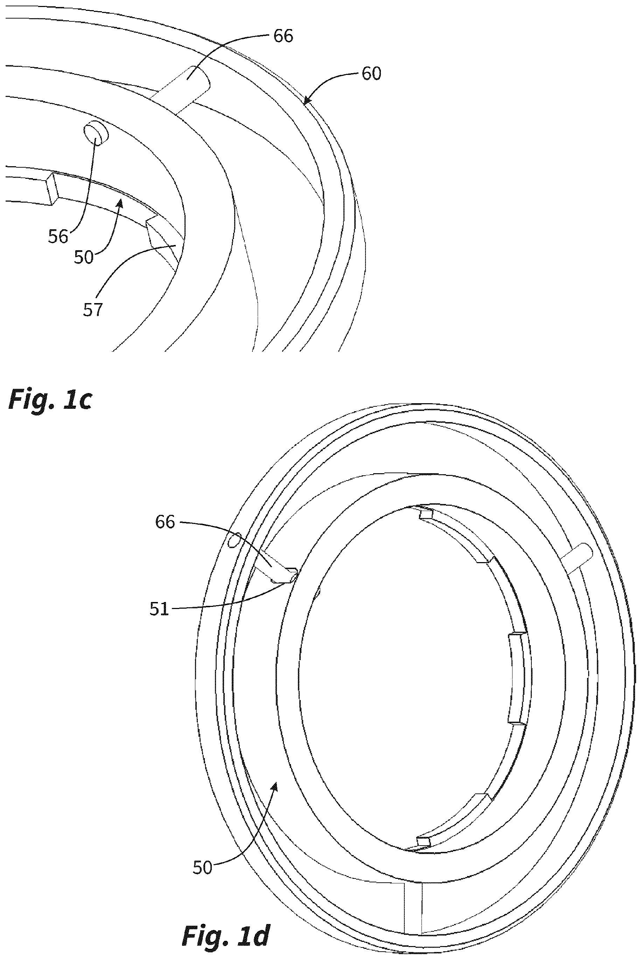

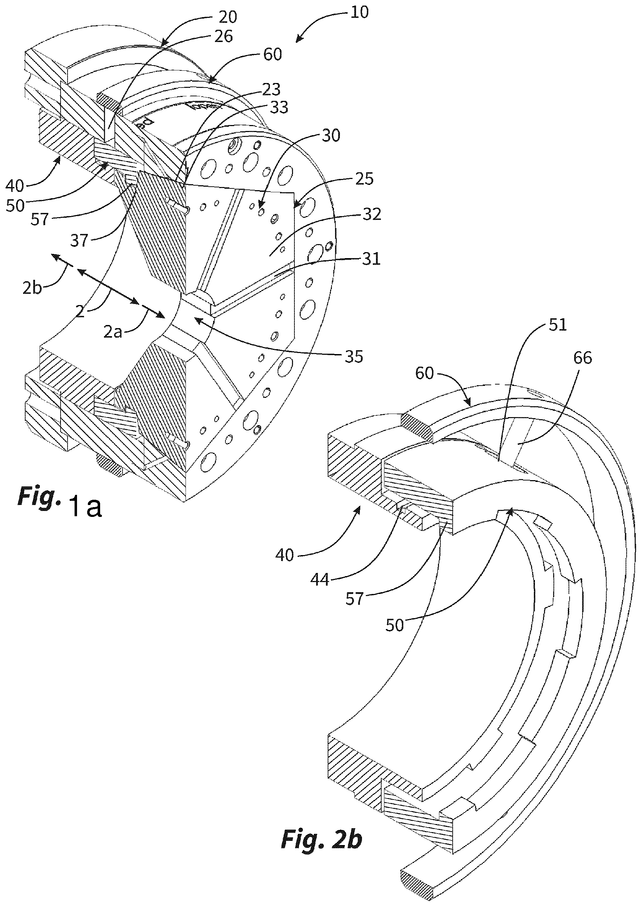

Die Fig. 1a bis 1d zeigen eine erste Ausführungsform einer erfindungsgemäßen Spannvorrichtung zum Einspannen eines vorzugsweise während der Bearbeitung um die Hauptachse 2 rotierenden Werkstücks.

Die Grundkomponenten, die auch bei den weiteren Ausführungsbeispielen in ähnlicher oder gleicher Form vorhanden sind, werden anhand von Fig. 1a erläutert.

Die Spannvorrichtung 10 verfügt über ein seinerseits aus mehreren Bauteilen zusammengesetztes Spannfutter 20, dessen Teilkomponenten zur Verdeutlichung mit identischer Schraffur versehen sind. Im Betrieb und im montierten Zustand der Spannvorrichtung ist eine Relativbewegung zwischen diesen zum Spannfutter gehörigen Komponenten nicht vorgesehen.

An seinem in Richtung 2a weisenden Ende verfügt das Spannfutter 20 über einen Aufnahmebereich 25 zur Aufnahme einer Spannzange 30. Dieser Aufnahmebereich 25 weist eine mehreckige, vorliegend sechseckige, Formgebung auf und wird durch schräggestellte und nach innen gewandte Gleitflächen 23 gebildet. Innerhalb des Aufnahmebereichs 25 ist eine Spannzange 30 angeordnet. Diese Spannzange 30 umfasst insgesamt sechs Spannbacken 32, die jeweils im Übergangsbereich zweier benachbarter Gleitflächen 23 an diesen anliegen und korrespondierend zu den Gleitflächen 23 des Spannfutters 20 nach außen gewandte Gleitflächen 33 aufweisen. Die Spannbacken 32 sind miteinander über in Umfangsrichtung elastisch komprimierbare Verbindungsstreifen 31 verbunden. Durch axiale Bewegung in Richtung der Hauptachse 2 kann aufgrund des gleitenden Kontakts der Gleitflächen 23, 33 eine radiale Aufweitung oder Komprimierung der Spannzange 30 erzielt werden. Dies führt auch zu einer Aufweitung bzw. Verengung des Spannbereichs 35 für das Werkstück.

Zur Erzielung einer axialen Bewegung der Spannzange 30 sind eine Zugstange 40 sowie eine Zughülse 50 vorgesehen.

Die Zugstange 40 ist vorliegend nur mittels des einen distalen Endes dargestellt. Unter der Zugstange im Sinne der Erfindung werden jene Komponenten zusammengefasst, die sich in unbeweglicher Relativlage zueinander befinden und gemeinsam axial zum Zwecke des Spannens und Entspannens verlagert werden. Es kann sich hierbei auch um einen Verbund mehrerer im montierten Zustand zueinander ortsfesten Komponenten handeln. In nicht näher dargestellter Art und Weise ist die Zugstange 40 mit einem hierfür vorgesehenen Antrieb versehen, der die axiale Bewegung leistet.

Im Bearbeitungsbetrieb ist die Zughülse 50 ortsfest zur Zugstange 40 angeordnet und wird gemeinsam mit dieser in Axialrichtung 2 verlagert. Das distale Ende der Zughülse 50 wird über einen Zugsteg 57 gebildet, der in Fig. 1a nicht entnehmbarer Weise mit in Umfangsrichtung verteilten Aussparungen versehen sein kann, um mit der Spannzange zusammen eine Bajonettkupplung zu bilden. Im gekoppelten Zustand dieser Bajonettkupplung, der in Fig. 1a dargestellt ist, ist bezogen auf die Axialrichtung ein Formschluss durch den Zugsteg 57 und eine korrespondierende Nut 37 an der Spannzange 30 gegeben. Im Betrieb bewegen sich also die Zugstange 40, die Zughülse 50 und die Spannzange 30 in Axialrichtung stets gemeinsam.

Um den Wechsel der Spannzange zu erleichtern, ist erfindungsgemäß vorgesehen, dass der Zugsteg 57 nicht dauerhaft ortsfest zur Zugstange 40 ist, sondern ohne Demontage der Spannvorrichtung bezogen auf die Axialrichtung 2 in Richtung des Pfeils 2a verlagert werden kann, um hierdurch die Entnahme der Spannzange 30 zu erleichtern.

Zur Steuerung der axialen Beabstandung des Zugstegs 57 von der Zugstange 40 ist als Schaltmittel ein Schaltring 60 vorgesehen.

Bezug nehmend auf Fig. 1c ist erkennbar, dass am Schaltring nach innen weisende Schaltbolzen 66 vorgesehen sind, die durch in Umfangsrichtung ausgerichtete Durchgangslanglöcher 26 am Spannfutter 20 hindurch in Eingriff mit in Axialrichtung erstreckten Nuten 51 an der Außenseite der Zughülse 50 stehen. Eine Drehung des Schaltrings 60 um die Hauptachse 2 führt daher zu einer ebensolchen Drehung der Zughülse 50 um die Achse 2. Eine axiale Relativbewegung der Zughülse 50 gegenüber dem Schaltring 60 bleibt durch die in Axialrichtung erstreckten Nuten 51 jedoch möglich.

Um die gewünschte axiale Verlagerung der Zughülse 50 und insbesondere des Zugstegs 57 gegenüber der Zugstange 40 zu bewirken, ist zwischen der Zughülse 50 und der Zugstange 40 eine Kulissen-Kopplungseinrichtung vorgesehen, die vorliegend eine Kulisse 44 an der Zugstange 40 und einen bolzenartigen in diese Kulisse 44 eingreifenden Kulissengleiter 56 an der Zughülse 50 umfasst. Dies führt dazu, dass eine Drehbewegung des Schaltrings 60 nicht nur die bereits beschriebene Drehung der Zughülse 50 bewirkt, sondern diese auch noch axial gegenüber der Zugstange 40 verlagert. Somit lässt sich die Zughülse 50 mit ihrem Zugsteg 57 vergleichsweise weit in Richtung des Pfeils 2a verlagern, so dass eine weitgehende Entspannung der Spannzange 30 eintritt, die eine Entnahme erleichtert.

Die Entnahme wird darüber hinaus dadurch erleichtert, dass die zum Zwecke der Relativbewegung der Kulisse 44 zum Kulissengleiter 56 vorgesehene Drehbewegung der Zughülse 50 gleichzeitig auch das zwischen dem Zugsteg 57 und der korrespondierenden Nut 37 an der Spannzange 30 vorgesehene Bajonett löst. Nach Drehen des Schaltrings 60 kann somit die Spannzange 30 verformungsfrei oder bei nur geringer Verformung entnommen werden.

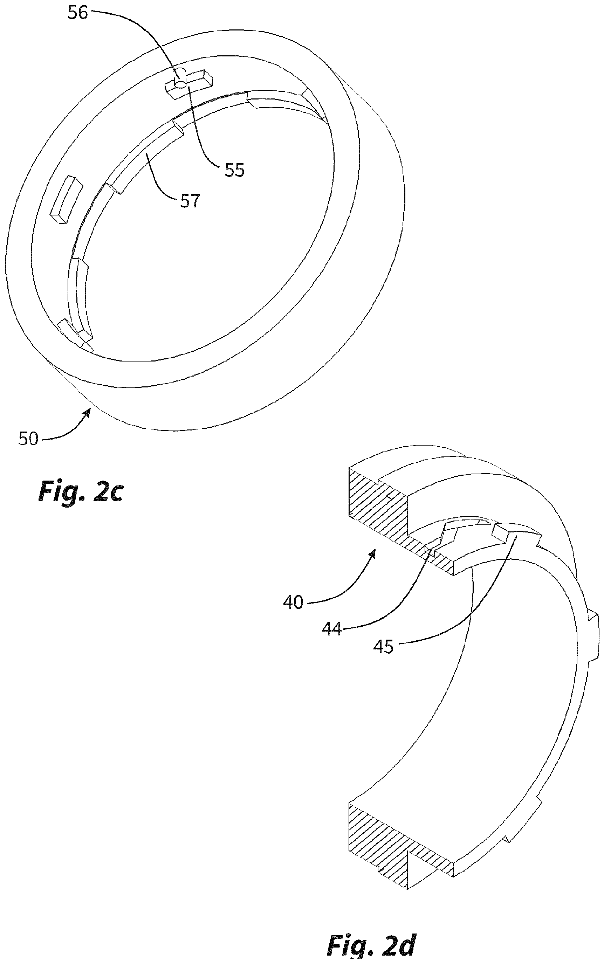

Fig. 2a bis 2d zeigt eine alternative Gestaltung, die zur Ausgestaltung der Fig. 1a bis 1d den folgenden Unterscheid aufweist: Während bei der Ausgestaltung der Fig. 1a bis 1d der oder die Kulissengleiter 56 im Zusammenspiel mit der oder den Kulissen 44 auch zur Übertragung axialer Kräfte zwischen der Zugstange 40 und der Zughülse 50 Verwendung finden, ist bei der Ausgestaltung gemäß der Fig. 2a bis 2d zusätzlich eine Bajonettkupplung vorgesehen. Die jeweiligen Segmente 45, 55 dieser Bajonettkupplung an der Zugstange 40 und der Zughülse 50 befinden sich in einer Betriebsrelativstellung in Umfangsrichtung an übereinstimmender Position, so dass hier Zugkräfte von der Zugstange 40 auf die Zughülse 50 sicher übertragen werden können. Der hier dennoch vorhandene Kulissengleiter 56 sowie die korrespondierende Kulisse 44 erfüllen hier somit einzig die Funktion der axialen Verlagerung der Zughülse 50 gegenüber der Zugstange 40, wobei die Kulisse 44 eine Formgebung aufweist, die bei Drehung der Zughülse 50 um die Hauptachse 2 zunächst keine axiale Verlagerung bewirkt, um zuvor die Bajonettkupplung und ihre Segmente 45, 55 außer Eingriff voneinander zu bringen. Erst anschließend erfolgt bei einer Drehbewegung der Zughülse 50 die axiale Verlagerung der Zughülse 50, bedingt durch einen schräggestellten Abschnitt innerhalb der Kulissenspur 44.

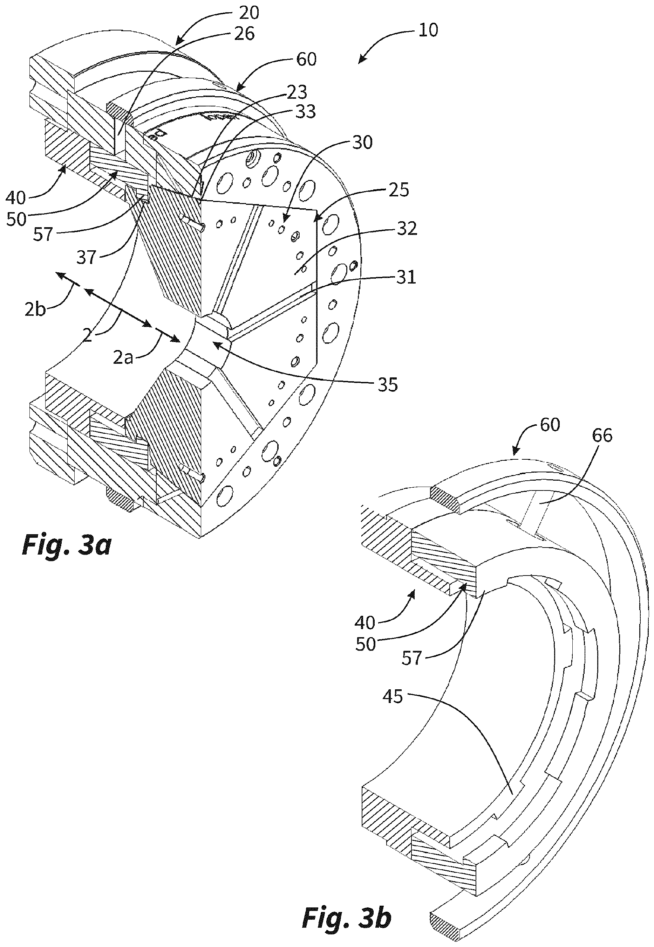

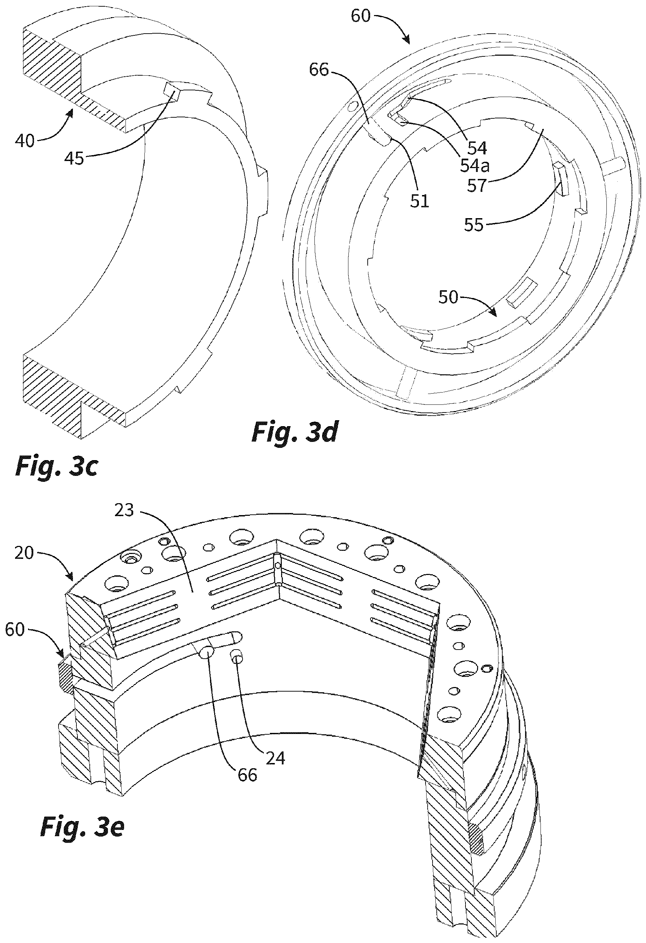

Die Ausgestaltung der Fig. 3a bis 3e verfügt ebenfalls über eine Kulissen-Kopplungseinrichtung, durch die die Drehbewegung der Zughülse 50 gegenüber dem Spannfutter 20 und der Zugstange 40 auch eine axiale Verlagerung der Zughülse 50 bewirkt. Allerdings ist diese KulissenKopplungseinrichtung im Falle der Ausgestaltung der Fig. 3a bis 3e zwischen dem Spannfutter 20 einerseits und der Zughülse 50 andererseits vorgesehen.

Zu diesem Zweck ist an der Innenseite des Spannfutters 20 ein nach innen weisender bolzenartiger Kulissengleiter 24 angeordnet. Korrespondierend hierzu findet sich an der Außenseite der Zughülse 50 eine Kulissenspur 54. Diese Kulissenspur 54 weist zum einen in etwa jene Formgebung auf, die bereits bei den vorangegangenen Ausführungsbeispielen die dortige Kulissenspur 44 aufweist. Sie verfügt jedoch darüber hinaus über einen Freibereich 54a, der es im Betrieb gestattet, trotz des Kulissengleiters 24 und der Kulissenspur 54 eine rein axiale Relativbewegung zwischen Zughülse 50 und Spannfutter 20 zu ermöglichen, um Werkstücke einspannen und lösen zu können. Die Verbindung zwischen der Zugstange 40 und der Zughülse 50 ist in ähnlicher Weise wie bei der Ausgestaltung der Fig. 2a bis 2d über ein Bajonett mit korrespondierenden Segmenten 55, 45 realisiert.

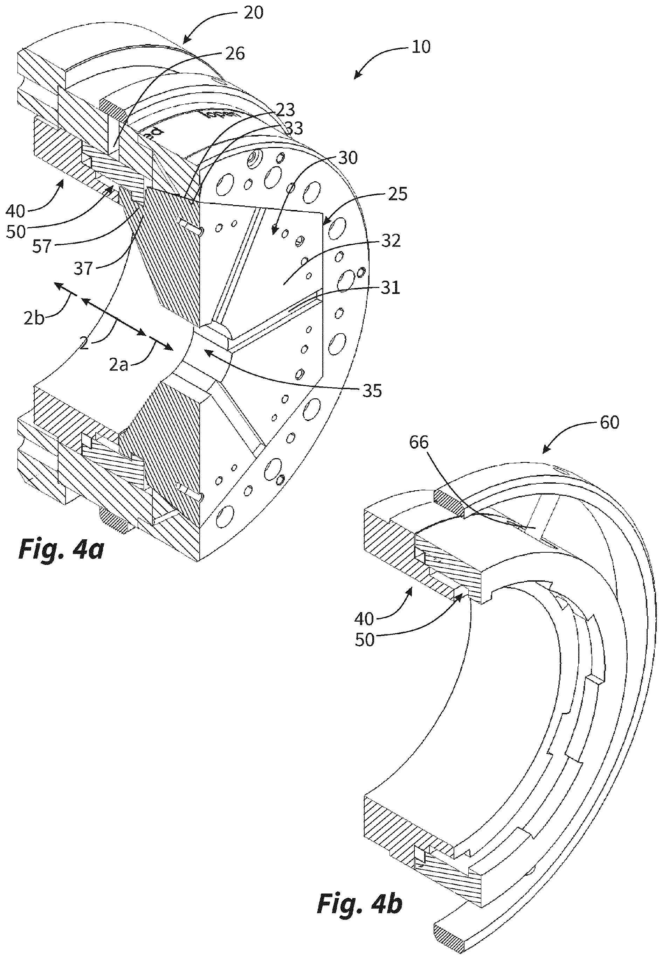

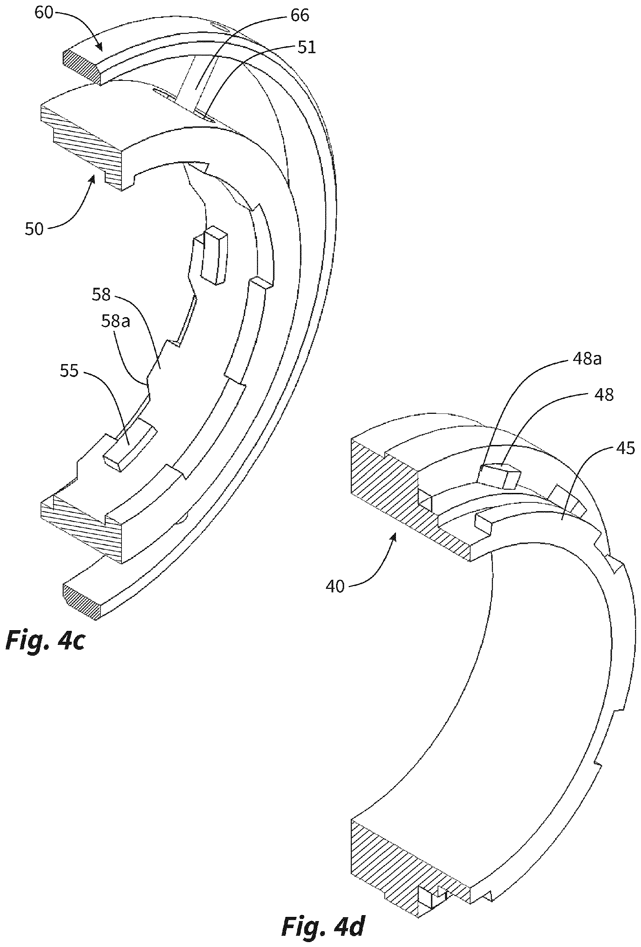

Die Ausgestaltung der Fig. 4a bis 4d unterscheidet sich von den vorangegangenen Ausführungsbeispielen dadurch, dass hier keine Kulisse im unmittelbaren Sinne vorgesehen ist. Stattdessen finden sich neben einer Bajonettkupplung der bereits beschriebenen Art zwischen Zugstange 40 und Zughülse 50 mit Segmenten 55, 45 bei der Ausgestaltung der Fig. 4a bis 4d stirnseitige, also axial frei zugängliche, Erhebungen 48 auf Seiten der Zugstange und korrespondierende Vertiefungen 58 auf Seiten der Zughülse 50. Dabei sind sowohl die Erhebungen 48 als auch die Vertiefungen 58 jeweils mit einer schrägen Gleitfläche 48a, 58a versehen. Hierdurch ist es möglich, bei Verdrehung der Zughülse 50 nach Lösen der Bajonettverbindung 45, 55 die Zughülse von der Zugstange 40 abzuheben und hierdurch die gewünschte axiale Bewegung und die Überführung in die Wechselstellung zu erzielen.

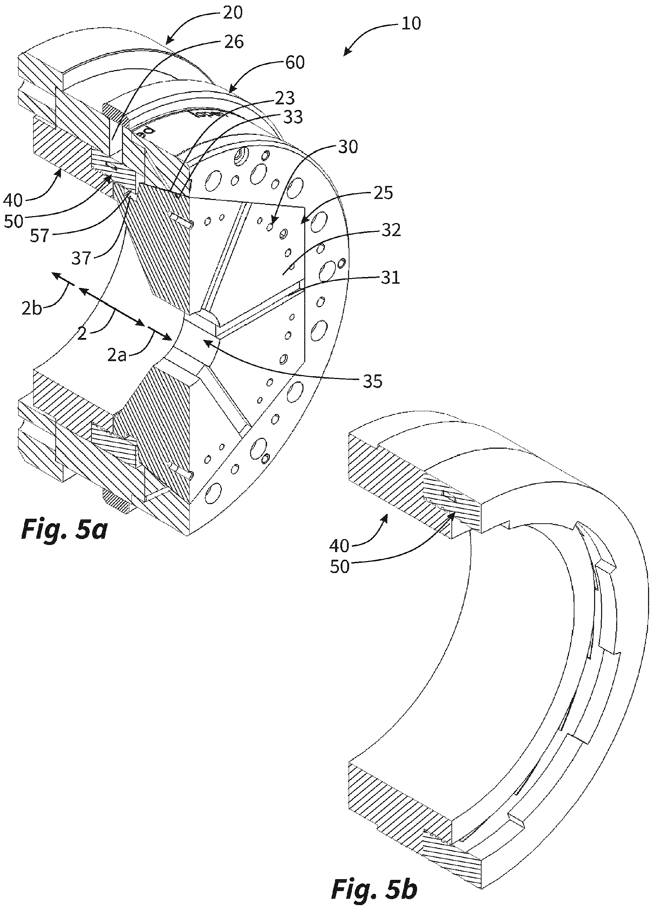

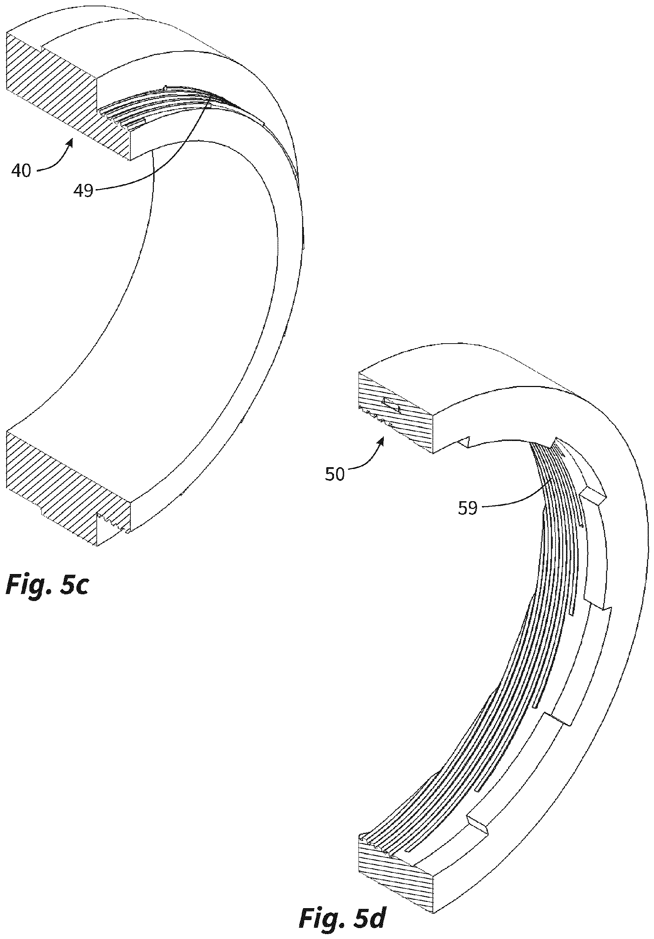

Bei der Ausgestaltung der Fig. 5a bis 5d ist zur Realisierung einer axialen Verlagerung der Zughülse 50 an deren Innenseite ein Innengewinde 59 vorgesehen. Korrespondierend hierzu ist an der Außenseite der Zugstange 40 ein Außengewinde 49 vorgesehen. Die Gewinde 49, 59 sind im Betrieb in Eingriff miteinander, wobei aufgrund großer Steigung des Gewindes und dessen Mehrgängigkeit bereits durch eine Verdrehung um etwa 45° eine ausreichende axiale Verlagerung der Zughülse 50 gegenüber der Zugstange 40 erzielt wird, um die Spannzange bequem lösbar zu machen.

Die Ausführungsbeispiele sind selbstverständlich exemplarisch zu verstehen. Die erfindungsgemäße Beabstandung der Zughülse 50 und insbesondere des Zugstegs 57 von der Zugstange 40 ist auch auf viele andere Weisen realisierbar.

## Patentansprüche

1. Spannvorrichtung (10) zum Einspannen eines Werkstücks mit
- einem Spannfutter (20),
- einer im Spannfutter (20) gelagerten Spannzange (30) mit einer Mehrzahl von ringförmig angeordneten Spannsegmenten (32), wobei die Spannzange (30) zum Zwecke des Spannens und Entspannens des Werkstücks durch axiale Bewegung gegenüber dem Spannfutter (20) radial aufgeweitet und radial zusammengezogen werden kann,
- einer Zugstange (40), die axial gegenüber dem Spannfutter (20) verlagerbar ist,
- einer Zughülse (50) zur axialen Kraftübertragung von der Zugstange (40) auf die Spannzange (30) mit einem Zugsteg (57), der formschlüssig mit der Spannzange (30) zusammenwirkt,
**dadurch gekennzeichnet, dass**
der Zugsteg (57) gegenüber der Zugstange (40) zwischen einer Betriebsrelativstellung und einer Wechselrelativstellung axial verlagerbar ist.

2. Spannvorrichtung (10) nach Anspruch 1,
**dadurch gekennzeichnet, dass**
ein von außen zugängliches Schaltmittel (60) vorgesehen ist, mittels dessen die axiale Verlagerung der Zugstegs (57) gegenüber der Zugstange (40) bewirkt werden kann, wobei das Schaltmittel vorzugsweise um eine zentrische Hauptachse (2) der Spannvorrichtung drehbar ausgebildet ist und insbesondere vorzugsweise als Schaltring (60) ausgebildet ist.

3. Spannvorrichtung nach Anspruch 1 oder 2,
**gekennzeichnet durch**
eine Kopplungseinrichtung (44, 54; 24, 56; 48, 58; 49, 59), die eine axiale Verlagerung der Zughülse (50) gegenüber der Zugstange (40) **durch** eine rotative Relativbewegung der Zughülse (50) gegenüber dem Spannfutter (20) bewirkt.

4. Spannvorrichtung nach Anspruch 3,
**dadurch gekennzeichnet, dass**
die Kopplungseinrichtung ausgebildet ist
- als Gewinde-Kopplungseinrichtung (49, 59) mit einem Innengewinde (59) und einem darin eingesetzten Außengewinde (49),
- als Kulissen-Kopplungseinrichtung (44, 56; 24, 54) mit einer Kulissenspur (44; 54) und einem in die Kulissenspur (44; 54) eingesetzten Kulissengleiter (56; 24) oder
- als Kopplungseinrichtung mit zwei aufeinander zuweisenden und aneinander anliegenden Stirnflächen (48, 58) an der Zughülse (50) und der Zugstange (40), wobei die Stirnflächen (48, 58) zumindest abschnittsweise uneben sind, so dass eine rotative Relativbewegung eine axiale Relativbewegung der Stirnflächen (48, 58) erzwingt oder zulässt.

5. Spannvorrichtung nach Anspruch 4,
**dadurch gekennzeichnet, dass**
von zwei Komponenten der Kulissen-Kopplungseinrichtung (44, 56; 24, 54) umfassend die Kulissenspur (44; 54) und den Kulissengleiter (24; 56)
- eine erste Komponente (54; 56) ortsfest zur Zughülse (50) vorgesehen ist und
- eine zweite Komponente (44; 24) ortsfest an der Zugstange (40) oder dem Spannfutter (20) vorgesehen ist.

6. Spannvorrichtung nach einem der vorstehenden Ansprüche,
**dadurch gekennzeichnet, dass**
der Zugsteg (57) Teil einer Bajonettkopplung (37, 57) ist, mittels derer die Zughülse (50) und die Spannzange (30) miteinander gekoppelt sind.

7. Spannvorrichtung nach einem der Ansprüche 2 bis 6,
**dadurch gekennzeichnet, dass**
die Kopplungseinrichtung (44, 54; 24, 56; 48, 58; 49, 59) derart ausgebildet ist, dass eine rotative Relativbewegung der Zughülse (50) gegenüber der Zugstange (40) nichtpro-portional zur axialen Verlagerung des Zugsteges (57) gegenüber der Zugstange (40) ist, wobei vorzugsweise ausgehend von der Betriebsrelativstellung eine rotative Relativbewegung der Zughülse (50) gegenüber der Zugstange (40) zunächst keine Axialbewegung verursacht.

## Claims

1. Clamping arrangement (10) for clamping a workpiece in place, having
- a chuck (20),
- a collet (30), which is mounted in the chuck (20) and has a plurality of clamping segments (32) arranged in annular form, wherein, for the purpose of clamping and releasing the workpiece, the collet (30) can be widened radially and drawn together radially by axial movement in relation to the chuck (20),
- a tension rod (40), which can be displaced axially in relation to the chuck (20),
- a tension sleeve (50) for transmitting force axially from the tension rod (40) to the collet (30) by way of a tension web (57), which interacts in a form-fitting manner with the collet (30),
**characterized in that**
the tension web (57) can be displaced axially in relation to the tension rod (40) between an operating relative position and a changeover relative position.

2. Clamping arrangement (10) according to Claim 1,
**characterized in that**
switching means (60) is provided, which can be accessed from the outside and can give rise to the axial displacement of the tension web (57) in relation to the tension rod (40), wherein the switching means is designed preferably such that it can be rotated about a central main axis (2) of the clamping arrangement and is designed in particular preferably in the form of a switching ring (60).

3. Clamping arrangement according to Claim 1 or 2,
**characterized by**
a coupling device (44, 54; 24, 56; 48, 58; 49, 59), which gives rise to axial displacement of the tension sleeve (50) in relation to the tension rod (40) by rotary movement of the tension sleeve (50) relative to the chuck (20).

4. Clamping arrangement according to Claim 3,
**characterized in that**
the coupling device is designed
- in the form of a threaded coupling device (49, 59) with an internal thread (59) and an external thread (49) inserted therein,
- in the form of a guide-type coupling device (44, 56; 24, 54) with a guide track (44; 54) and a guide slider (56; 24) inserted into the guide track (44; 54), or
- in the form of a coupling device with two mutually facing and abutting end surfaces (48, 58) on the tension sleeve (50) and the tension rod (40), wherein the end surfaces (48, 58) are uneven, at least in part, and therefore a rotary relative movement forces or allows axial movement of the end surfaces (48, 58) relative to one another.

5. Clamping arrangement according to Claim 4,
**characterized in that**,
of two components of the guide-type coupling device (44, 56; 24, 54) comprising the guide track (44; 54) and the guide slider (24; 56),
- a first component (54; 56) is provided in a fixed position in relation to the tension sleeve (50) and
- a second component (44; 24) is provided in a fixed position on the tension rod (40) or the chuck (20).

6. Clamping arrangement according to one of the preceding claims,
**characterized in that**
the tension web (57) is part of a bayonet coupling (37, 57), by means of which the tension sleeve (50) and the collet (30) are coupled to one another.

7. Clamping arrangement according to one of Claims 2 to 6,
**characterized in that**
the coupling device (44, 54; 24, 56; 48, 58; 49, 59) is designed such that rotary movement of the tension sleeve (50) relative to the tension rod (40) is not in proportion to axial displacement of the tension web (57) in relation to the tension rod (40), wherein, preferably starting from the operating relative position, rotary movement of the tension sleeve (50) relative to the tension rod (40) in a first instance does not cause any axial movement.

## Revendications

1. Dispositif de serrage (10) pour fixer une pièce usinée avec :
- un chemisage de serrage (20) ;
- une pince de serrage (30) disposée dans le chemisage de serrage (20) avec une pluralité de segments de serrage (32) disposés en forme de bague, la pince de serrage (30) pouvant être élargie dans le plan radial et resserrée dans le plan radial par un mouvement axial par rapport au chemisage de serrage (20) à des fins de serrage et desserrage de la pièce usinée ;
- une barre de traction (40) pouvant être déplacée dans le plan axial par rapport au chemisage de serrage (20) ;
- une douille de traction (50) pour la transmission de force axiale de la barre de traction (40) à la pince de serrage (30) avec un étai de traction (57) interagissant par complémentarité de formes avec la pince de serrage (30) ;
**caractérisé en ce que** :
l'étai de traction (57) peut être déplacé dans le plan axial par rapport à la barre de traction (40) entre une position relative de fonctionnement et une position relative inversée.

2. Dispositif de serrage (10) selon la revendication 1, **caractérisé en ce qu'**un moyen de commutation (60) accessible depuis l'extérieur est prévu à l'aide duquel le déplacement axial de l'étai de traction (57) peut être provoqué par rapport à la barre de traction (40), le moyen de commutation étant de préférence réalisé de façon à pouvoir tourner autour d'un axe principal (2) central du dispositif de serrage et étant notamment de préférence réalisé sous la forme d'une bague de commutation (60).

3. Dispositif de serrage selon la revendication 1 ou 2, **caractérisé par** un dispositif de couplage (44, 54 ; 24, 56 ; 48, 58 ; 49, 59) provoquant un déplacement axial de la douille de traction (50) par rapport à la barre de traction (40) par le biais d'un mouvement rotatif relatif de la douille de traction (50) par rapport au chemisage de serrage (20).

4. Dispositif de serrage selon la revendication 3, **caractérisé en ce que** le dispositif de couplage est réalisé :
- sous la forme d'un dispositif de couplage de filets (49, 59) avec un filet intérieur (59) et un filet extérieur (49) inséré à l'intérieur ;
- sous la forme d'un dispositif de couplage de coulisse (44, 56 ; 24, 54) avec une piste de coulisse (44 ; 54) et un glisseur de coulisse (56 ; 24) inséré dans la piste de coulisse (44 ; 54) ; ou
- sous la forme d'un dispositif de couplage avec deux surfaces avant (48, 58) orientées l'une sur l'autre et reposant l'une contre l'autre au niveau de la douille de traction (50) et de la barre de traction (40), les surfaces avant (48, 58) étant au moins en partie inégales, de façon à ce qu'un mouvement relatif rotatif force ou permette un mouvement relatif axial des surfaces avant (48, 58).

5. Dispositif de serrage selon la revendication 4, **caractérisé en ce que** parmi deux composants du dispositif de couplage de coulisse (44, 56 ; 24, 54) comprenant la piste de coulisse (44 ; 54) et le glisseur de coulisse (24 ; 56) :
- un premier composant (54 ; 56) est prévu fixement sur place par rapport à la douille de traction (50) ; et
- un deuxième composant (44 ; 24) est prévu fixement sur place au niveau de la barre de traction (40) ou du chemisage de serrage (20).

6. Dispositif de serrage selon l'une quelconque des revendications précédentes, **caractérisé en ce que** l'étai de traction (57) fait partie d'un couplage à baïonnette (37, 57) à l'aide duquel la douille de traction (50) et la pince de serrage (30) sont couplées entre elles.

7. Dispositif de serrage selon l'une quelconque des revendications 2 à 6, **caractérisé en ce que** le dispositif de couplage (44, 54 ; 24, 56 ; 48, 58 ; 49, 59) est réalisé de telle sorte qu'un mouvement relatif rotatif de la douille de traction (50) par rapport à la barre de traction (40) ne soit pas proportionnel au déplacement axial de l'étai de traction (57) par rapport à la barre de traction (40), un mouvement relatif de rotation de la douille de traction (50) par rapport à la barre de traction (40) n'entraînant d'abord aucun mouvement axial, de préférence à partir de la position relative de fonctionnement.
